# EUROPÄISCHE PATENTSCHRIFT

(11) **EP 1 935 367 B1**
(45) Veröffentlichungstag und Bekanntmachung des Hinweises auf die Patenterteilung: **12.05.2010**
(21) Anmeldenummer: 07021725.2
(22) Anmeldetag: 08.11.2007
(51) Int. Cl.: A61C 3/00, A61C 17/00, A61C 19/00

(54) **Medizinisches Handstück und auswechselbare Düse für ein solches**
Medical tool holder and replaceable nozzle for such
Pièce à main médicale et buse échangeable destinée à celle-ci

(30) Priorität: 19.12.2006 DE 102006060076
(43) Veröffentlichungstag der Anmeldung: 25.06.2008
(73) Patentinhaber: Ferton Holding SA, 2800 Delemont (CH)
(72) Erfinder: Pichat, Patrick, 74100 Annemasse (FR); Donnet, Marcel, 01630 Saint Jean de Gonville (FR)
(74) Vertreter: Bauer, Clemens

(56) Entgegenhaltungen:
- EP-A- 0 299 229
- US-A- 4 519 385
- US-A- 5 242 300

## Beschreibung

Die vorliegende Erfindung betrifft ein medizinisches Handstück nach dem Oberbegriff des Patentanspruches 1, sowie eine hierfür geeignete auswechselbare Düse nach dem Oberbegriff des Patentanspruches 6. Insbesondere betrifft die vorliegende Erfindung ein medizinisches Handstück für Dentalzwecke, das eine auswechselbare Düse aufweist, die zum Zuführen eines Luft-PulverGemischs und eines Fluids geeignet ist.

Derartige Handstücke, beispielsweise für ein dentales Abrasivstrahlgerät, sind aus der EP 1 346 700 A1, bzw. der DE 103 31 583 bekannt. Diese Handstücke weisen meist zwei oder drei griffseitige Zuleitungen auf, die mit zwei Düsenleitungen verbunden sind, die an einer Düsenspitze ins Freie münden und dort die medizinisch wirksamen Fluide bzw. Gemische austreten lassen.

Aus der DE 101 14 324 A1 ist ein Düsenstück bekannt, bei dem der Austritt einer ersten Düsenleitung für ein Luft-Pulver-Gemisch von einem konzentrisch angeordneten äußeren Austritt einer zweiten Düsenleitung für den Auslass eines Fluids umgeben ist. Die beiden Austritte sind über Anschlussbohrungen an zwei getrennte Anschlussleitungen eines dabei separat ausgeführten und an dem Kopfende eines Handstücks festgelegten Griffteils angeschlossen. Mit einem Düsenstück dieser Ausbildung kann beispielsweise eine supragingivale Pulverstrahlreinigung mit einer gleichzeitigen Fluidbestrahlung der behandelten Zahnfläche unterstützt werden, um deren schonende Bearbeitung bei einer durchzuführenden Zahnreinigung zu ermöglichen.

Die US 2006/0105292 A1 offenbart ein auswechselbares Düsenteil einer Spritze zur Zuführung eines medizinisch wirksamen Mediums, wobei die Düse mittels eines Schraubverschlusses am Kopfteil einer Spritze befestigbar ist, sodass nach jeder Behandlung die Düse aus hygienischen Gründen ausgewechselt werden kann.

Die EP 1 243 227 A2 offenbart ein medizinisches Handstück nach dem Oberbegriff des Patentanspruches 1, das mit einer Düse ausgestattet ist, die zwei Düsenleitungen für die Zuführung eines Pulver-Luft-Gemischs und von Wasser aufweist, wobei die Düse auswechselbar an der Griffhülse des medizinischen Handstücks angeordnet ist. Für die auswechselbare Anordnung der Düse an der Griffhülse dient eine Nut-Federverbindung, die derart ausgebildet ist, dass zwei Verbindungsleitungen, die zwischen der Griffhülse und der Düse angeordnet sind, sowohl in die Griffhülse als auch in zwei Anschlussleitungen der Düse münden, die als Stufenbohrungen ausgebildet sind, wobei die an den jeweiligen proximalen Enden befindlichen größeren Durchmesser der Stufenbohrungen der Anschlussleitungen zum Einstecken der Verbindungsleitungen angepasst sind, und wobei am vorderen Ende der Düse Auslassrohre angebracht sind, um geeignete Austrittsquerschnitte zu erhalten.

Ein wesentlicher Nachteil der bekannten auswechselbaren Düsen besteht darin, dass diese umständlich sterilisiert werden müssen, bevor sie für die nächste Behandlung verwendet werden können. Darüber hinaus ist der Aufbau und die Art der Verbindung zwischen griffseitiger Zuleitung und Düsenleitung umständlich, da z. B. zusätzliche Anschlussleitungen vorgesehen sind, die zwischen der Griffhülse und der Düse zu liegen kommen und die oft verstopfen oder umständlich zu reinigen sind, weswegen auch diese oftmals ausgewechselt werden müssen.

Ein weiterer Nachteil der bekannten medizinischen Handstücke besteht darin, dass der Aufbau sowohl der Griffhülse als auch der Düse sehr aufwendig ist, weswegen die Herstellungskosten des medizinischen Handstücks bzw. der auswechselbaren Düse sehr hoch sind, weswegen der behandelnde Arzt in der Regel sowohl die Griffhülse als auch die Düse zur mehrmaligen Verwendung desinfizieren muss. Darüber hinaus besteht bei subgingivalen Anwendungen die Schwierigkeit, dass die Düsendurchmesser zur Vermeidung von Verletzungen nur sehr geringe Werte annehmen dürfen. Dies führt zu langen dünnen Kanälen im Inneren der Düse, die oftmals nicht zufrieden stellend zu reinigen und zu desinfizieren sind.

Die EP 0 299 229 offenbart einen Aufsatz für ein dentales Handstück, mittels welchem verhindert werden kann, dass das einen Zahn behandelnde Medium ungewollterweise in dem Verkehr verbleibenden Mundraum gelangt, indem der Aufsatz kragenförmig ist und mit seinem vorderen Ende auf den Zahn aufgesetzt wird.

Die US 4,519,385 offenbart ein Handstück mittels welchem ein Fluid einer Operationsstelle zugeführt werden kann, wobei das Handstück gleichzeitig die Möglichkeit bietet, das Fluid von der Operationsstelle wieder abzusaugen.

Der vorliegenden Erfindung liegt die Aufgabe zugrunde, das medizinische Handstück der vorbekannten Art dahingehend zu verbessern, dass ein umständliches Desinfizieren beschleunigt wird oder entfällt, der Aufbau und die Herstellung des medizinischen Handstücks bzw. der Düse einfacher und günstiger wird und dass die Leerlaufzeiten zwischen zwei Behandlungen eines Patienten kürzer werden, sodass mehr Patienten schneller mit dem medizinischen Handstück behandelt werden können.

Die vorliegende Erfindung löst diese Aufgaben durch die kennzeichnenden Merkmale der Patentansprüche 1 und 6. Vorteilhafte Ausgestaltungen der vorliegenden Erfindung sind in den Unteransprüchen gekennzeichnet und dort beschrieben.

Das medizinische Handstück der vorliegenden Erfindung weist eine Düse mit zwei Düsenzuführleitungen auf, die für die Zuführung des Pulver-Luftgemisches und des Fluids dienen. An dem Handstück befindet sich, bzw. der vordere Teil des Handstücks ist ein Kopfteil mit einem kopfseitigen Verbindungsteil zum auswechselbaren Verbanden des Handstücks mit der Düse, wobei das Handstück zwei Zuleitungen aufweist, mit deren Hilfe das Pulver-Luftgemisch und das Fluid zugeführt werden. Die zwei Zuleitungen werden mit den Düsenzuführleitungen durch eine dichtende Presspassung, einer düsenseitigen Dichtfläche und einer griffseitigen kopfseitigen Dichtfläche verbunden.

Der Vorteil der vorliegenden Erfindung liegt darin, dass keine Verbindungsleitungen oder andere Verbindungsteile notwendig sind, um die Düsenzuführleitungen der Düse mit den Zuleitungen des Griffteils zu verbinden. Der wesentliche Vorteil einer solchen Anordnung besteht darin, dass die Düse sehr klein und kostengünstig hergestellt werden kann, so dass diese als Einmalartikel zur Anwendung kommt und nicht mehr desinfiziert werden muss. Um diese besonders klein und kostengünstig ausführen zu können, muss die dichtende Presspassung durch möglichst einfache Mittel erzielt werden. Dies hat im Übrigen den Vorteil, dass die verhältnismäßig kleinen und dünnen Kanäle im Inneren der Düse nicht mehr gereinigt bzw. desinfiziert werden müssen, weil die Düse selbst nach jeder Anwendung entsorgt wird und bei jeder Anwendung eine neue Düse zum Einsatz kommt.

Gemäß der Erfindung ist die griffseitige Dichtfläche am Ende einer griffseitigen T-Feder oder T-Nut des Kopfteils angeordnet, in die eine düsenseitige T-Nut bzw. T-Feder einführbar ist, die die düsenseitige Dichtfläche trägt. Mit Vorteil ist die Einführachse zum Einführen der T-Nut in die T-Feder in etwa senkrecht zur Längsachse des Handstücks, wobei Einführwinkel von vorteilhafterweise 45° - 135°, besonders bevorzugt 80° - 100° in Frage kommen.

Die düsenseitige Dichtfläche weist zwei Leitungsdichtungen auf, die die zwei Leitungsöffnungen abdichten, in die die Düsenzuführleitungen münden. Diese Leitungsdichtungen können kreisförmig um die Leitungsöffnungen der Düsenzuführleitungen herum angeordnet sein und aus demselben Material wie die Düse selbst bestehen. Nach einer anderen Ausführungsform weist die griffseitige Dichtfläche an den Leitungsöffnungen der Zuleitungen Leitungsdichtungen auf, die dann eine dichtende Presspassung der düsenseitigen Dichtfläche und der griffseitigen Dichtfläche dergestalt ermöglichen, dass die sich gegenüberliegenden Leitungsöffnungen von Zuleitung und Düsenzuführleitung nach außen hin abgedichtet werden.

Die düsenseitige T-Nut weist mit Vorteil eine rechte Gleitnut und eine linke Gleitnut auf, in die eine rechte Federklammer und eine linke Federklammer der griffseitigen T-Feder eingreifen, sodass eine dichtende Presspassung zwischen der düsenseitigen Dichtfläche und der griffseitigen Dichtfläche bewirkt werden kann. Die dichtende Presspassung der düsenseitigen Dichtfläche und der griffseitigen Dichtfläche ist bereits dann erzielt, wenn die sich gegenüberstehenden Leitungen dichtend miteinander verbunden sind. Um diese Presspassung zu erzielen, sind grundsätzlich zwei bevorzugte Ausführungsformen vorgesehen:
1. Die düsenseitige Dichtfläche wird in der Aufsicht trapezförmig geformt, so dass die seitlichen Längskanten der düsenseitigen Dichtflächen mit den seitlichen Längskanten der griffseitigen T-Feder derart zusammenwirken, dass beim Einführen der Düse in das kopfseitige Verbindungsteil die Presspassung bewirkt wird. Dies kann beispielsweise dadurch erzielt werden, dass die untere Querkante der trapezförmigen, düsenseitigen Dichtfläche kleiner und die obere Querkante der trapezförmigen, düsenseitigen Dichtfläche größer ist als die obere Öffnung der griffseitigen T-Feder, so dass die seitlichen, konisch zulaufenden Längskanten beim Einführen der Düse in das kopfseitige Verbindungsteil in der griffseitigen T-Feder keilförmig auflaufen und dort klemmen. Gleichzeitig wird durch die trapezförmige Ausführung das Einführen der Düse in das kopfseitige Verbindungsteil erleichtert.
2. Eine untere Gleitnutbreite wird größer als eine obere Gleitnutbreite der düsenseitigen T-Nut ausgebildet, so dass die untere Stärke der düsenseitigen Dichtfläche geringer ist als die obere Stärke der düsenseitigen Dichtfläche, wobei die untere Stärke der düsenseitigen Dichtfläche kleiner ist als die T-Federbreite der griffseitigen T-Feder, die obere Stärke der düsenseitigen Dichtfläche aber größer ist als die T-Federbreite, so dass auch hier beim Einführen der Düse in das kopfseitige Verbindungsteil durch den konischen Zuschnitt der Gleitnut ein keilförmiges Auflaufen der seitlichen Längskanten der düsenseitigen Dichtfläche innerhalb der T-Feder und somit eine Klemmung bewirkt wird.

Gemäß einem Beispiel, das nicht Teil der Erfindung ist, kann die Düse aber auch durch einen Bajonett-, Dreh- oder einen Schraubverschluss am Verbindungsteil angebracht werden, sodass es zu einer dichtenden Presspassung der düsenseitigen Dichtfläche und der griffseitigen Dichtfläche kommt, wobei im Falle von Leitungsdichtungen diese Dichtflächen durch die Oberflächen der Leitungsdichtungen selbst repräsentiert werden. Auch hier stehen die Ebenen der Dichtflächen im Wesentlichen senkrecht auf der Längsachse des Handstücks.

Die vorliegende Erfindung betrifft darüber hinaus eine Düse für ein medizinisches Handstück gemäß Anspruch 6. Eine erste Düsenzuführleitung mündet mit eine zweiten Düsenzuführleitung an der erfindungsgemäßen Düsenspitze gegebenenfalls derart, dass der Pulver-Luftgemisch und das Fluid gleichzeitig, ggf. getrennt, an der Düsenspitze austreten.

Mit Vorteil besteht die Düse aus einem elastisch verformbaren Kunststoffmaterial, insbesondere aus einem Elastomer, so dass beim Einführen der Düse in das kopfseitige Verbindungsteil eine Verformung des Kunststoffmaterials möglich ist, um somit eine dichtende Presspassung zu erzielen. Mit Vorteil sind die Leitungsdichtungen dabei aus demselben Material wie die Düse geformt, ggf. einstückig mit dieser, die beispielsweise durch ein Spritzgussverfahren als Einmalartikel ausgebildet sein kann.

Eine besonders bevorzugte Ausführungsform der vorliegenden Erfindung wird durch die beiliegenden Zeichnungen näher erläutert. Dabei zeigen:
- Fig. 1: einen schematischen Querschnitt durch ein erfindungsgemäßes Handstück mit Düse;
- Fig. 2: eine schematische Seitenansicht auf ein Handstück mit Schlauch und Düse,
- Fig. 3: eine schematische Queransicht der erfindungsgemäßen Düse,
- Fig. 4: eine schematische Queransicht des kopfseitigen Verbindungsteils mit Kopfteil des erfindungsgemäßen Handstücks, und
- Fig. 5: eine teilweise Queransicht des griffseitigen Teils der erfindungsgemäßen Düse.

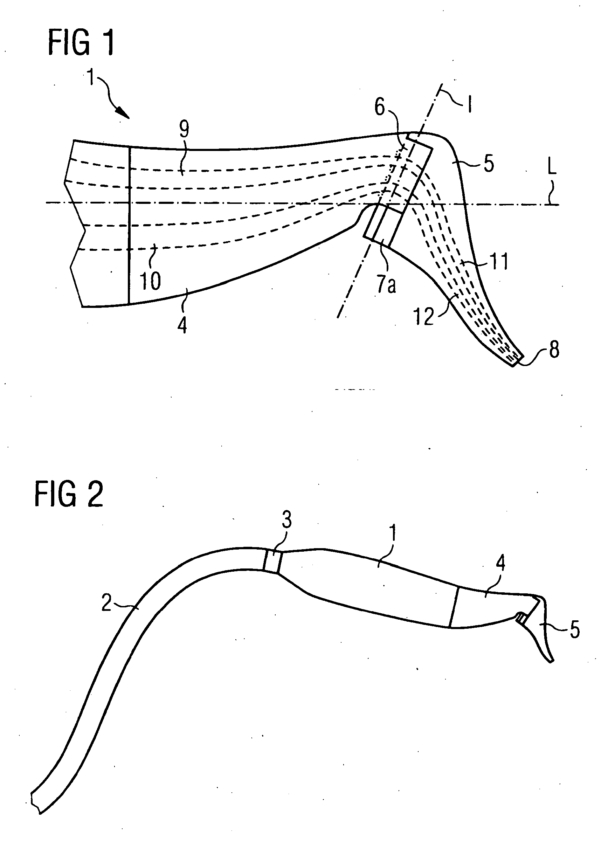

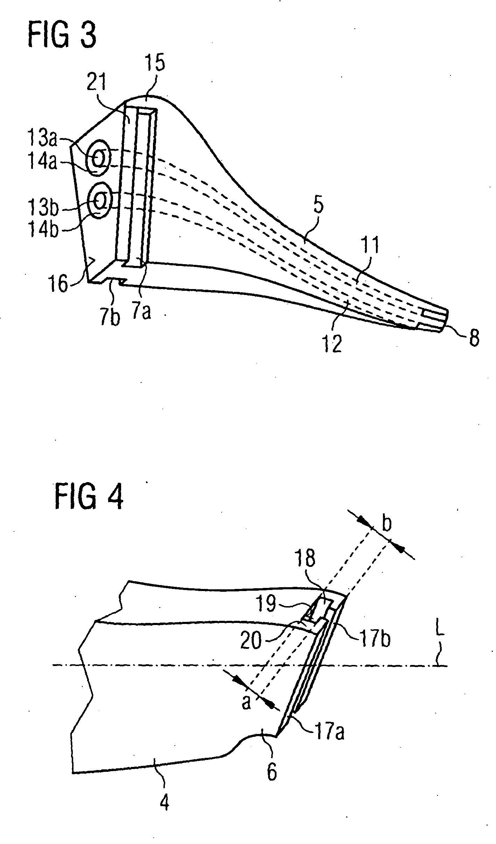

Fig. 1 zeigt den schematischen Querschnitt durch den vorderen Teil eines medizinischen Handstücks 1, das an seinem vorderen Teil ein Kopfteil 4 aufweist, das ein kopfseitiges Verbindungsteil 6 zum Verbinden des Handstücks 1 mit einer Düse 5 trägt. Schematisch ist des Weiteren die Längsachse L des Handstücks 1 eingezeichnet, die in etwa senkrecht steht zur Verbindungs- bzw. Einführachse 1, die in einer Ebene parallel zu den Ebenen liegt, in denen die düsenseitige Dichtfläche und die griffseitige Dichtfläche (vgl. Fig. 3 und 4) liegen.

Das Handstück 1 weist eine erste Zuleitung 9 zum Zuführen beispielsweise eines Luft-Pulver-Gemisches und eine zweite Zuleitung 10 zum Zuführen beispielsweise von Wasser auf. Die Düse 5, die in der Regel in direktem Kontakt mit dem zu behandelnden Patienten steht, soll auswechselbar angeordnet sein, weswegen diese eine düsenseitige T-Nut 21 aufweist, die in eine griffseitige T-Feder 18 einführbar ist (vgl. Fig. 3 und 4). In Fig. 1 ist eine rechte Gleitnut 7a erkennbar, die unterhalb des kopfseitigen Verbindungsteils 6 herausragt. Die Düse 5 weist eine Düsenspitze 8 auf, zu der eine erste Düsenzuführleitung 11 und eine zweite Düsenzuführleitung 12 führen, wobei die erste Düsenzuführleitung 11 dichtend mit der ersten Zuleitung 9, und die zweite Düsenzuführleitung 12 dichtend mit der zweiten Zuleitung 10 verbunden ist.

Fig. 2 zeigt schematisch das medizinische Handstück 1 mit vorderem Kopfteil 4, Düse 5 und einem Anschlussstück 3 des Handstücks 1, an dem ein Schlauch 2 angeschlossen werden kann. Über den Schlauch 2 wird das Luft-Pulver-Gemisch und das Wasser zugeführt; sofern sich im oder am Handstück 1 ein Pulverbehälter befindet, kann über den Schlauch 2 auch nur Druckluft und Wasser zugeführt werden.

Fig. 3 zeigt schematisch die hintere Queransicht der Düse 5, wobei die erste Düsenzuführleitung 11 und die zweite Düsenzuführleitung 12 innerhalb der Düse 5 schematisch angedeutet sind. Beide Düsenzuführleitungen 11, 12 münden an der Düsenspitze 8.

Gespeist wird die erste Düsenzuführleitung 11 über eine erste Leitungsöffnung 13a, während die zweite Düsenzuführleitung 12 über eine zweite Leitungsöffnung 13b gespeist wird. Um die Leitungsöffnungen 13a, 13b herum sind Leitungsdichtungen 14a, 14b angedeutet. Diese Leitungsdichtungen 14a, 14b können beliebige Formen annehmen, solange gewährleistet ist, dass sowohl eine Dichtung nach außen als auch eine Dichtung zwischen den Leitungsöffnungen 13a, 13b sichergestellt ist. Beispielsweise könnten die Leitungsdichtungen 14a, 14b auch am Rande der Dichtfläche 16 angeordnet sein, wobei.eine Querdichtungsnut dann zwischen den beiden Leitungsöffnungen 13a, 13b vorgesehen sein muss. Mit Vorteil sind die Leitungsdichtungen 14a, 14b einstückig aus demselben Material wie die Düse 5 gefertigt, um die Kosten der Düse 5 möglichst niedrig zu halten.

Die Düse 5 weist eine düsenseitige T-Nut 21 auf, die dadurch gebildet wird, dass eine rechte Gleitnut 7a und eine linke Gleitnut 7b von der Dichtfläche 16 beabstandet, seitlich in die Oberfläche der Düse 5 eingekerbt sind. Mit Vorteil verlaufen die Gleitnuten 7a, 7b nicht vollständig über die gesamte Oberfläche der Düse 5, sondern enden kurz unterhalb der oberen Ausdehnung der Düse 5, so dass ein Nutabsatz 15 entsteht. Dieser Nutabsatz 15 verhindert beim Einführen in das kopfseitige Verbindungsteil 6 (vgl. Fig. 4) ein Durchrutschen der Düse 5.

Fig. 4 zeigt schematisch die Queransicht des kopfseitigen Verbindungsteils 6. Verbindungsteil 6, Kopfteil 4 und Handstück 1 können einstückig ausgebildet sein. Das Verbindungsteil 6 weist insbesondere eine griffseitige T-Feder 18 auf, die durch eine T-förmige Ausfräsung am vorderen Teil des Verbindungsteils 6 in etwa rechtwinklig zur Längsachse L des Handstücks 1 ausgebildet ist. Durch die T-förmige Ausfräsung entstehen eine rechte Federklammer 17a und eine linke Federklammer 17b, die in die entsprechenden Gleitnuten 7a, 7b der düsenseitigen T-Nut 21 eingreifen. Damit beim Einführen der Düse 5 in das kopfseitige Verbindungsteil 6 eine dichtende Presspassung zwischen der düsenseitigen Dichtfläche 16 und der griffseitigen Dichtfläche 19, bzw. zwischen den Leitungsdichtungen 14a, 14b und der gegenüberliegenden Dichtfläche zustande kommt, sind erfindungsgemäß zwei Möglichkeiten vorgesehen:

Einerseits kann die düsenseitige Dichtfläche 16 in der Aufsicht trapezförmig geformt sein (vgl. Fig. 3), so dass die seitlichen Längskanten der düsenseitigen Dichtflächen 16 mit den seitlichen Längskanten der griffseitigen T-Feder 18 derart zusammenwirken, dass beim Einführen der Düse 5 in das kopfseitige Verbindungsteil 6 die Presspassung bewirkt wird. Zu diesem Zweck ist die untere Querseite der trapezförmigen Dichtfläche 16 kleiner als die obere Breite der T-förmigen Ausfräsung am Verbindungsteil 6, während die obere Querseite der trapezförmigen Dichtfläche 16 im Bereich des Nutabsatzes 15 größer ist, als die obere Breite der T-förmigen Ausfräsung des Verbindungsteils 6, so dass beim Einführen der Düse 5 eine Klemmung bewirkt wird.

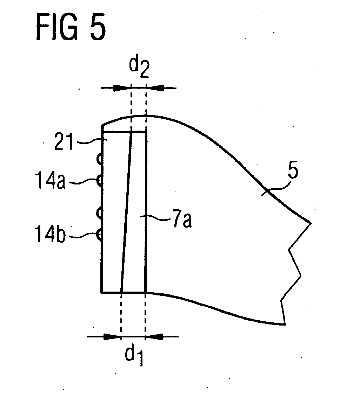

Andererseits ist es gemäß einer schematischen Ansicht des rückwärtigen Teils der Düse 5 in Fig. 5 möglich, die untere Gleitnutbreiten d₁ der rechten und linken Gleitnut 7a, 7b größer auszuführen als die oberen Gleitnutbreiten d₂, sodass die untere Stärke der düsenseitigen Dichtfläche 16 geringer ist als die obere Stärke der düsenseitigen Dichtfläche 16, wobei die untere Stärke der düsenseitigen Dichtfläche 16 kleiner ist als die T-Federbreite a der griffseitigen T-Feder 18 (vgl. Fig. 4), die obere Stärke der düsenseitigen Dichtfläche 16 aber größer ist als die T-Federbreite a (vgl. Fig. 4), so dass beim Einführen der Düse 5 eine Klemmung bewirkt wird.

Natürlich ist es auch möglich, sowohl die düsenseitige Dichtfläche 16 als auch die Gleitnuten 7a, 7b entsprechend Fig. 5 trapezförmig zu gestalten, sodass eine doppelte Klemmung beim Einführen in die griffseitige T-Feder 18 bewirkt wird. Zu diesem Zweck ist die griffseitige T-Feder 18 entsprechend angepasst, d.h. insbesondere quaderförmig geformt. Natürlich ist es auch möglich, die T-förmige Ausfräsung im Verbindungsteil 6 entsprechend trapezförmig zu gestalten, sodass dann eine rechtwinklig geformte Dichtfläche 16 in der T-Feder 18 an der dort trapezförmig gestalteten Ausfräsung aufläuft und sich dort festklemmt.

Nach einer bevorzugten Ausführungsform der vorliegenden Erfindung wird die Klemmung der beiden Bauteil bevorzugt dadurch erreicht, dass zum Einen die düsenseitige Dichtfläche 16 auf die griffseitige Dichtfläche 19 gedrückt wird und zum Anderen sich die Flächen der rechten und linken Gleitnut 7a, 7b an den rechten und linken Federklammern 17a, 17b entsprechend abstützen und sich die seitlichen den Gleitnuten 7a, 7b benachbarten Flächen der düsenseitigen T-Nut 21 an den der Federklammern 17a, 17b benachbarten Flächen der griffseitigen T-Feder 18 jeweils abstützen. Um dies zu erreichen, sind diese entsprechenden Flächen (21/7a,b und 18/17a,b) in einem Winkel von etwa 4° gegenüber den düsenseitigen und griffseitigen Dichtflächen 16 bzw. 19 angeordnet, so dass mit zunehmender Einschubtiefe die beiden Dichtflächen 16, 19 mehr und mehr auseinandergedrückt werden.

Durch diese Ausgestaltung der Düse 5 kann diese als Einmalartikel hergestellt werden, sodass ein umständliches Desinfizieren entfällt. Das Auswechseln erfolgt dabei ohne jegliche Hilfsmittel durch einfaches Einführen der Düse 5 in das kopfseitige Verbindungsteil 6. Durch die konische, bzw. trapezförmige Ausgestaltung der düsenseitigen T-Nut und/oder der griffseitigen T-Feder kann eine zuverlässige Presspassung erzielt werden, um eine zuverlässige Abdichtung der Verbindungsstelle zwischen den Zuleitungen 9, 10 und den Düsenzuführleitungen 11, 12 zu erzielen.

## Patentansprüche

1. Medizinisches Handstück (1) mit einer mit diesem verbindbaren Düse (5), die eine erste Düsenzuführleitung (11) fur ein Pulver-Luftgemisch und eine zweite Düsenzuführleitung für ein Fluid aufweist, und einem Kopfteil (4), welches eine erste Zuleitung (9) und eine zweite Zuleitung (10) zur Zuführung des Luft-Pulver-Gemisches sowie des Fluids aufweist, wobei das Kopfteil (4) einen kopfseitigen Verbindungsteil (6) zum auswechselbaren Verbinden des Handstücks (1) mit der Düse (5) aufweist, **gekennzeichnet durch** eine düsenseitige Dichtfläche (16) und eine griffseitige Dichtfläche (19), wobei die düsenseitige Dichtfläche eine erste Leitungsöffnung (13a, 13b) für die erste Düsenleitung (11) und eine zweite Leitungsöffnung (13b) für eine zweite Düsenleitung (12) aufweist, die jeweils **durch** eine erste Leitungsdichtung (14a) und eine zweite Leitungsdichtung (14b) umgeben sind, die beim Verbinden der Düse mit dem Kopfteil (4) über einen Eingriff einer T-Nut (21) mit einer T-Feder (18) eine dichtende Presspassung gegenüber den Öffnungen der ersten und zweiten Zuleitung (9, 10) herstellen.

2. Medizinisches Handstück nach Anspruch 1,
**dadurch gekennzeichnet, dass**
die griffseitige Dichtfläche (19) am Ende einer griffseitigen T-Feder (18) des Kopfteils (4) angeordnet ist, in die eine düsenseitige T-Nut (21) einführbar ist, die die düsenseitige Dichtfläche (16) trägt.

3. Medizinisches Handstück nach Anspruch 2,
**dadurch gekennzeichnet, dass**
die düsenseitige T-Nut (21) eine rechte Gleitnut (7a) und eine linke Gleitnut (7b) bildet, in die eine rechte Federklammer (17a) und eine linke Federklammer (17b) der griffseitigen T-Feder (18) eingreifen, so dass eine dichtende Presspassung zwischen der düsenseitigen Dichtfläche (16) und der griffseitigen Dichtfläche (19) bewirkt wird.

4. Medizinisches Handstück nach Anspruch 3,
**dadurch gekennzeichnet, dass**
die düsenseitige Dichtfläche (16) in der Aufsicht trapezförmig geformt ist, so dass die seitlichen Längskanten der düsenseitigen Dichtflächen (16) mit den seitlichen Längskanten der griffseitigen T-Feder (18) derart zusammenwirken, dass beim Einführen der Düse (5) in das kopfseitige Verbindungsteil (6) die Presspassung bewirkt wird.

5. Medizinisches Handstück nach einem der Ansprüche 2 - 4,
**dadurch gekennzeichnet, dass**
eine untere Gleitnutbreite (d₁) größer ist als eine obere Gleitnutbreite (d₂) der düsenseitigen T-Nut (21), so dass die untere Stärke der düsenseitigen Dichtfläche (16) geringer ist als die obere Stärke der düsenseitigen Dichtfläche (16), wobei die untere Stärke der düsenseitigen Dichtfläche (16) kleiner ist als die T-Federbreite (a) der griffseitigen T-Feder (18), die obere Stärke der düsenseitigen Dichtfläche (16) aber größer ist als die T-Federbreite (a).

6. Düse (5) für ein medizinisches Handstück (1) nach einem der vorhergehenden Ansprüche, umfassend eine erste Düsenzuführleitung (11) für ein Pulver-Luftgemisch und eine zweite Düsenzuführleitung (12) für ein Fluid, wobei die Düse (5) eine düsenseitige Dichtfläche (16) mit einer ersten Leitungsöffnung (13a) für die erste Düsenzuführleitung (11) und eine zweite Leitungsöffnung (13b) für die zweite Düsenzuführleitung (12), welche jeweils durch eine erste Leitungsdichtung (14a) und eine zweite Leitungsdichtung (14b) umgeben sind, aufweist, wobei die düsenseitige Dichtfläche (16) mit einer griffseitigen Dichtfläche (19) eines Kopfteils (4) über einen Eingriff einer T-Nut (21) mit einer T-Feder (18) derart dichtend verbindbar ist, dass die erste und zweite Leitungsöffnung (13a, 13b) durch die Leitungsdichtungen (14a, 14b) mit Öffnungen einer ersten und einer zweiten Zuleitung (9, 10) des Handstücks (1) über eine Presspassung dichtend verbindbar ist.

7. Düse (5) nach Anspruch 6,
**dadurch gekennzeichnet, dass**
die erste Düsenzuführleitung (11) mit der zweiten Düsenzuführleitung (12) an einer Düsenspitze (8) derart münden, dass zwei medizinisch wirksame Medien gleichzeitig an der Düsenspitze (8) austreten können.

8. Düse (5) nach Anspruch 6 oder 7,
**dadurch gekennzeichnet, dass**
die Düse aus einem elastisch verformbaren Kunststoffmaterial, insbesondere aus einem Elastomer, besteht.

9. Düse (5) nach einem der Ansprüche 6 bis 8,
**dadurch gekennzeichnet, dass**
die Düse einteilig ist.

10. Düse (5) nach einem der Ansprüche 6 bis 9,
**dadurch gekennzeichnet, dass**
die Leitungsdichtungen (14a, 14b) aus demselben Material wie die Düse (5) bestehen.

## Claims

1. A medical hand piece (1) with a nozzle (5) adapted for connection thereto and provided with a first nozzle feed line (11) for a powder-air mixture and a second nozzle feed line for a fluid, and with a head piece (4) being provided with a first supply line (9) and a second supply line (10) for supplying the air-powder mixture and the fluid, wherein said head piece (4) is provided with a connecting element (6) on the head side for interchangeably connecting the hand piece (1) to the nozzle (5),
**characterized by** a sealing surface (16) on the nozzle side and a sealing surface (19) on the grip side, wherein said sealing surface on the nozzle side is provided with a first line opening (13a) for the first nozzle line (11) and a second line opening (13b) for a second nozzle line (12) being surrounded by a first line sealing (14a) and a second line sealing (14b), respectively, which, when the nozzle is connected to the head piece (4) by means of a T-slot (21) engaging with a T-spring (18), form a sealing press fit against the openings of the first and second supply lines (9, 10).

2. A medical hand piece according to claim 1, **characterized in that** the sealing surface (19) on the grip side is located at the end of a T-spring (18) on the grip side of the head piece (4), into which a T-slot (21) on the nozzle side is insertable, which bears the sealing surface (16) on the nozzle side.

3. A medical hand piece according to claim 2, **characterized in that** the T-slot (21) on the nozzle side forms a right sliding groove (7a) and a left sliding groove (7b) into which engage a right spring clip (17a) and a left spring clip (17b) of the T-spring (18) on the grip side, so that a sealing press-fit is produced between the sealing surface (16) on the nozzle side and the sealing surface (19) on the grip side.

4. A medical hand piece according to claim 3, **characterized in that** the sealing surface (16) on the nozzle side is trapezoidally shaped in top view, so that the lateral longitudinal edges of the sealing surfaces (16) on the nozzle side co-operate in such a manner with the lateral longitudinal edges of the T-spring (18) on the grip side that, when introducing the nozzle (5) into the connecting element (6) on the head side, the press-fit is produced.

5. A medical hand piece according to any one of claims 2 to 4, **characterized in that** a lower sliding groove width (d₁) is larger than an upper sliding groove width (d₂) of the T-slot (21) on the nozzle side, so that the lower thickness of the sealing surface (16) on the nozzle side is smaller than the upper thickness of the sealing surface (16) on the nozzle side, wherein the lower thickness of the sealing surface (16) on the nozzle side is smaller than the T-spring width (a) of the T-spring (18) on the grip side, whereas the upper thickness of the sealing surface (16) on the nozzle side is larger than the T-spring width (a).

6. A nozzle (5) for a medical hand piece (1) according to any one of the preceding claims, comprising a first nozzle feed line (11) for a powder-air mixture and a second nozzle feed line (12) for a fluid, wherein said nozzle (5) is provided with a sealing surface (16) on the nozzle side, having a first line opening (13a) for the first nozzle feed line (11) and a second line opening (13b) for a second nozzle line (12), which are surrounded by a first line sealing (14a) and a second line sealing (14b), respectively, wherein the sealing surface (16) on the nozzle side is adapted to be sealingly connected to a sealing surface (19), on the grip side, of a head piece (4), by having a T-slot (21) engage with a T-spring (18) such that the first and the second line opening (13a, 13b) are adapted, by means of the line sealings (14a, 14b), to be sealingly connected to openings of a first and a second supply line (9, 10) by means of a press fit.

7. A nozzle (5) according to claim 6, **characterized in that** the first nozzle feed line (11) and the second nozzle feed line (12) open out at a nozzle tip (8) such that two medically effective media can simultaneously exit at the nozzle tip (8).

8. A nozzle (5) according to claim 6 or 7, **characterized in that** the nozzle is made of an elastically deformable plastic material, in particular an elastomer.

9. A nozzle (5) according to any one of claims 6 to 8, **characterized in that** the nozzle is formed in one piece.

10. A nozzle (5) according to any one of claims 6 to 9, **characterized in that** the line sealings (14a, 14b) are made of the same material as the nozzle (5).

## Revendications

1. Pièce à main médicale (1) comprenant une buse (5) capable d'être reliée à celle-ci, qui comprend une première conduite d'amenée de buse (11) pour un mélange poudre/air et une seconde conduite d'amenée de buse pour un fluide, et une partie de tête (4) qui comprend une première conduite d'amenée (9) et une seconde conduite d'amenée (10) pour l'amenée du mélange air/poudre ainsi que du fluide, dans laquelle la partie de tête (4) comprend une partie de liaison (6), côté tête, pour la liaison interchangeable de la pièce à main (1) avec la buse (5),
**caractérisée par** une surface d'étanchéité (16) côté buse et par une surface d'étanchéité (19) côté poignée, telles que la surface d'étanchéité côté buse comprend une première ouverture de conduite (13a, 13b) pour la première conduite de buse (11) et une seconde ouverture de conduite (13b) pour une seconde conduite de buse (12), qui sont entourées respectivement par un premier joint de conduite (14a) et par un second joint de conduite (14b) qui, lors de la liaison de la buse avec la partie de tête (4), établissent un ajustement pressé étanche par rapport aux ouvertures de la première et de la seconde conduite d'amenée (9, 10), via un engagement d'une gorge (21) en forme de T avec un ressort (18) en forme de T.

2. Pièce à main médicale selon la revendication 1,
**caractérisée en ce que** la surface d'étanchéité (19) côté poignée est agencée à l'extrémité d'un ressort (18) en forme de T et situé côté poignée de la partie de tête (4), susceptible d'être introduit dans une gorge en forme de T (21) côté buse, qui porte la surface d'étanchéité (16) côté buse.

3. Pièce à main médicale selon la revendication 2,
**caractérisée en ce que** la gorge en forme de T (21) côté buse forme une gorge de coulissement de droite (7a) et une gorge de coulissement de gauche (7b) dans lesquelles s'engagent une pince-ressort (17a) à droite et une pince-ressort (17b) à gauche du ressort en forme de T (18) côté poignée, de sorte que l'on assure un ajustement pressé et étanche entre la surface d'étanchéité (16) côté buse et la surface d'étanchéité (19) côté poignée.

4. Pièce à main médicale selon la revendication 3,
**caractérisée en ce que** la surface d'étanchéité (16) côté buse est conformée en vue de dessus en forme de trapèze, de sorte que les arêtes longitudinales latérales des surfaces d'étanchéité (16) côté buse coopèrent avec les arêtes longitudinales latérales du ressort en forme de T (18) côté poignée de telle manière que lors de l'introduction de la buse (5) dans la pièce de liaison (6) côté tête, on réalise l'ajustement pressé.

5. Pièce à main médicale selon l'une des revendications 2 à 4,
**caractérisée en ce qu'**une largeur inférieure (d1) de la gorge en forme de T (21) côté buse est supérieure à une largeur supérieure (d2) de ladite gorge, de sorte que l'épaisseur inférieure de la surface d'étanchéité (16) côté buse est inférieure à l'épaisseur supérieure de la surface d'étanchéité (16) côté buse, et que l'épaisseur inférieure de la surface d'étanchéité (16) côté buse est inférieure à la largeur (a) du ressort en forme de T côté poignée (18), mais que l'épaisseur supérieure de la surface d'étanchéité (16) côté buse est supérieure à la largeur (a) du ressort en forme de T.

6. Buse (5) pour une pièce à main médicale (1) selon l'une des revendications précédentes, comprenant une première conduite d'amenée de buse (11) pour un mélange poudre/air et une seconde conduite d'amenée de buse (12) pour un fluide, dans laquelle la buse (5) comporte une surface d'étanchéité (16) côté buse avec une première ouverture de conduite (13a) pour la première conduite d'amenée de buse (11) et une seconde ouverture de conduite (13b) pour la seconde conduite d'amenée de buse (12), lesquelles sont respectivement entourées par un premier joint de conduite (14a) et par un second joint de conduite (14b), dans laquelle la surface d'étanchéité (16) côté buse est susceptible d'être reliée avec une surface d'étanchéité (19) côté poignée d'une pièce de tête (4) de manière étanche, via un engagement d'une gorge en forme de T (21) avec un ressort en forme de T (18), de telle manière que la première et la seconde ouverture de conduite (13a, 13b) sont susceptibles d'être reliées de manière étanche via un ajustement pressé au moyen des joints de conduites (14a, 14b) avec les ouvertures d'une première et d'une seconde conduite d'amenée (9, 10).

7. Buse (5) selon la revendication 6,
**caractérisée en ce que** la première conduite d'amenée de buse (11) et la seconde conduite d'amenée de buse (12) débouchent au niveau d'une pointe de buse (8) de telle manière que deux milieux médicalement actifs peuvent sortir simultanément au niveau de la pointe de buse (8).

8. Buse selon la revendication 6 ou 7,
**caractérisée en ce que** la buse et en une matière plastique élastiquement déformable, en particulier un élastomère.

9. Buse selon l'une des revendications 6 à 8,
**caractérisée en ce que** la buse est d'une seule pièce.

10. Buse selon l'une des revendications 6 à 9,
**caractérisée en ce que** les joints de conduite (14a, 14b) sont du même matériau que la buse (5).
